# EUROPEAN PATENT APPLICATION

(11) **EP 4 811 638 A1**
(43) Date of publication of application: **23.09.2026**
(21) Application number: 23958696.9
(22) Date of filing: 28.11.2023
(51) Int. Cl.: H02M 3/158

(54) **SUSPENSION CAPACITOR THREE-LEVEL BOOST CONVERTER AND CONTROL METHOD**

(30) Priority: 13.11.2023 CN 202311520541
(71) Applicant: Sungrow Power Supply Co., Ltd., Hefei, Anhui 230088 (CN)
(72) Inventor: WANG, Changyou, Hefei, Anhui 230088 (CN); PAN, Nianan, Hefei, Anhui 230088 (CN); FENG, Jigui, Hefei, Anhui 230088 (CN)
(74) Representative: Epping - Hermann - Fischer
(86) International application number: PCT/CN2023/134616
(87) International publication number: WO 2025/102427

(57) **Abstract**

Disclosed in the present application are a suspension capacitor three-level Boost converter and a control method, comprising: a first end and a second end of an inductor are respectively connected to a positive input end of a Boost converter and an anode of a first diode, and an anode and a cathode of a second diode are respectively connected to a cathode of the first diode and a positive output end of the Boost converter; a first end and a second end of a first power device are respectively connected to a second end of the inductor and a first end of a second power device, and a second end of the second power device is connected to a negative input end of the Boost converter; a first end and a second end of a first switch are respectively connected to the second end of the first power device and a first end of a suspension capacitor, and a second end of the suspension capacitor is connected to the cathode of the first diode; and a controller is used for controlling the disconnection moment of the first switch to lag behind the disconnection moment of the first power device and the disconnection moment of the second power device, so as to avoid a switch device from bearing an over-voltage failure risk.

## Description

This application claims the priority to Chinese Patent Application No. 2023115205412, titled "FLYING CAPACITOR THREE-LEVEL BOOST CONVERTER AND CONTROL METHOD", filed on November 13, 2023 with the China National Intellectual Property Administration, which is incorporated herein by reference in its entirety.

### FIELD

The present disclosure relates to the technical field of power electronics, and in particular to a flying capacitor three-level Boost converter and a method for controlling a flying capacitor three-level Boost converter.

### BACKGROUND

Flying capacitor three-level Boost converters are widely used in high-voltage DC-DC conversion scenarios due to advantages such as low switching stress and low ripple current.

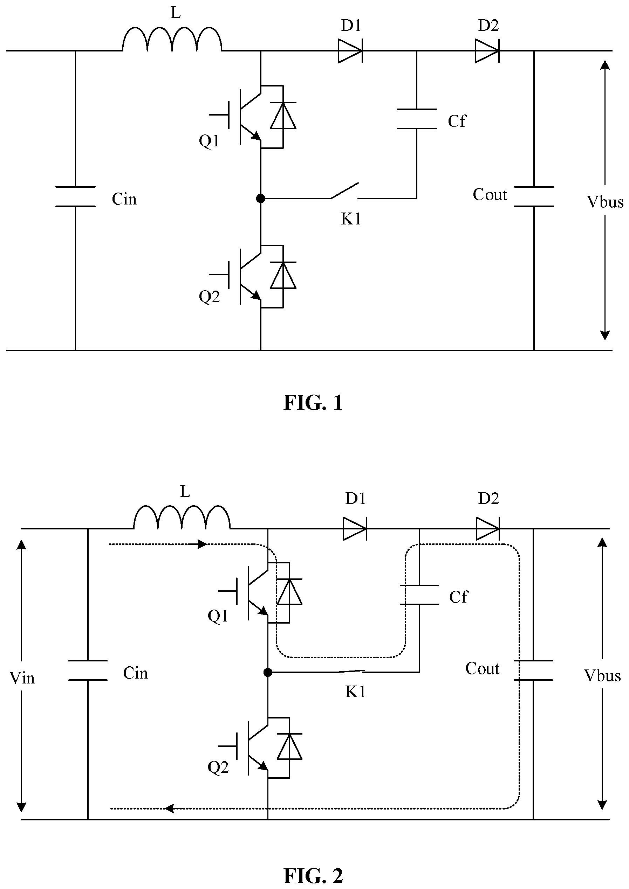

FIG. 1 shows a typical flying capacitor three-level Boost topology, which includes an input capacitor Cin, an output capacitor Cout, an inductor L, a first diode D1, a second diode D2, a first switching transistor Q1, a second switching transistor Q2, a first switch K1, and a flying capacitor Cf.

The first switch K1 functions to protect the second switching transistor Q2 against an overvoltage breakdown at a time instant when an inputted high-voltage is applied.

Due to delays in turn-off signal links and differences in turn-off speeds of the first switching transistor Q1, the second switching transistor Q2, and the first switch K1, the first switching transistor Q1, the second switching transistor Q2, and the first switch K1 are turned off at different time instants, resulting in the switching devices suffering a risk of overvoltage failure.

### SUMMARY

In view of this, a flying capacitor three-level Boost converter and a method for controlling a flying capacitor three-level Boost converter are provided according to the present disclosure, to prevent switching devices from suffering a risk of overvoltage failure.

A flying capacitor three-level Boost converter is provided according to the present disclosure. The converter includes a controller, an inductor, a first power device, a second power device, a first diode, a second diode, a first switch, and a flying capacitor.

A first terminal of the inductor is connected to a positive input terminal of the Boost converter, a second terminal of the inductor is connected to an anode of the first diode, an anode of the second diode is connected to a cathode of the first diode, and a cathode of the second diode is connected to a positive output terminal of the Boost converter.

A first terminal of the first power device is connected to the second terminal of the inductor, a second terminal of the first power device is connected to a first terminal of the second power device, a second terminal of the second power device is connected to a negative input terminal of the Boost converter; a first terminal of the first switch is connected to the second terminal of the first power device, a second terminal of the first switch is connected to a first terminal of the flying capacitor, and a second terminal of the flying capacitor is connected to the cathode of the first diode.

The controller is configured to control a time instant when the first switch is turned off to be later than a time instant when the first power device is turned off and to be later than a time instant when the second power device is turned off.

In an embodiment, the controller is further configured to, in response to receiving a Boost converter shutdown instruction or in response to determining to perform a fault shutdown: transmit a turn-off signal to the first power device; transmit a turn-off signal to the second power device; and transmit a turn-off signal to the first switch immediately after a predetermined time interval.

In an embodiment, the converter further includes a delay circuit.

The controller is further configured to, in response to receiving a Boost converter shutdown instruction or in response to determining to perform a fault shutdown: transmit a turn-off signal to the first power device; transmit a turn-off signal to the second power device; and transmit a turn-off signal to the first switch. The turn-off signal transmitted by the controller is outputted to the first switch after being delayed by a predetermined time interval through the delay circuit.

In an embodiment, the delay circuit includes: a first resistor and a first capacitor.

The turn-off signal transmitted by the controller to the first switch is inputted to a first terminal of the first resistor, a second terminal of the first resistor is connected to a first terminal of the first capacitor, a second terminal of the first capacitor is grounded, and the first terminal of the first capacitor is connected to a control terminal of the first switch.

In an embodiment, the delay circuit further includes a third diode.

A cathode of the third diode is connected to the first terminal of the first resistor, and an anode of the third diode is connected to the second terminal of the first resistor.

In an embodiment, the controller includes a first output terminal, a second output terminal, and a third output terminal.

The first output terminal is connected to a control terminal of the first power device, the second output terminal is connected to a control terminal of the second power device, the third output terminal is connected to a first terminal of the delay circuit, and a second terminal of the delay circuit is connected to a control terminal of the first switch.

The turn-off signals are transmitted via the first output terminal, the second output terminal, and the third output terminal of the controller, respectively.

In an embodiment, the converter further includes a second switch and a second resistor.

A first terminal of the second switch is connected to the second terminal of the first switch, and a second terminal of the second switch is connected to the negative input terminal of the Boost converter via the second resistor.

In an embodiment, the converter further includes at least one of a first voltage balancing circuit and a second voltage balancing circuit, where the first voltage balancing circuit includes at least one of a resistor and a voltage regulator, and the second voltage balancing circuit includes at least one of a resistor and a voltage regulator.

The first voltage balancing circuit is connected in parallel between a first terminal and a second terminal of the first power device.

The second voltage balancing circuit is connected in parallel between a first terminal and a second terminal of the second power device.

A method for controlling a flying capacitor three-level Boost converter is provided according to the present disclosure, where the Boost converter includes a controller, an inductor, a first power device, a second power device, a first diode, a second diode, a first switch and a flying capacitor.

The method includes: controlling, in response to receiving a Boost converter shutdown instruction or in response to determining to perform a fault shutdown, a time instant when the first switch is turned off to be later than a time instant when the first power device is turned off and to be later than a time instant when the second power device is turned off.

In an embodiment, the controlling the time instant when the first switch is turned off to be later than the time instant when the first power device is turned off and to be later than the time instant when the second power device is turned off includes: transmitting a turn-off signal to the first power device; transmitting a turn-off signal to the second power device; and transmitting a turn-off signal to the first switch immediately after a predetermined time interval.

In an embodiment, the Boost converter further includes a delay circuit.

The controlling the time instant when the first switch is turned off to be later than the time instant when the first power device is turned off and to be later than the time instant when the second power device is turned off includes: transmitting a turn-off signal to the first power device; transmitting a turn-off signal to the second power device, and transmitting a turn-off signal to the first switch; where the turn-off signal is outputted to the first switch after being delayed by a predetermined time interval through the delay circuit.

It can be seen that the present disclosure has the following beneficial effects.

In the method for controlling the flying capacitor three-level Boost converter according to the embodiment of the present disclosure, since the time instant when the first switch is turned off is later than the time instant when the first power device is turned off and later than the time instant when the second power device is turned off, the first diode and the second diode are forward biased for freewheeling when the first power device and the second power device are turned off during the shutdown of the Boost converter. A maximum voltage stress on the first power device is clamped at a voltage (that is, a half of a bus voltage) of the flying capacitor, and a maximum voltage stress on the second power device is clamped at a difference between the bus voltage and the voltage of the flying capacitor (that is, is clamped at a half of the bus voltage), thereby effectively eliminating the risk of overvoltage failure of the first power device and the second power device.

### BRIEF DESCRIPTION OF THE DRAWINGS

FIG. 1 shows a typical flying capacitor three-level Boost topology;
FIG. 2 is a schematic diagram of a current path when Q1 is turned on and K1 is turned on;
FIG. 3 is a schematic diagram of a current path when Q1 is turned on and K1 is turned off;
FIG. 4 is a schematic diagram of a current path when Q2 is turned on and K1 is turned on;
FIG. 5 is a schematic diagram of a current path when Q2 is turned on and K1 is turned off;
FIG. 6 is a schematic diagram of a Boost converter according to an embodiment of the present disclosure;
FIG. 7 is a schematic diagram of delay control according to an embodiment of the present disclosure;
FIG. 8 is a schematic diagram of a delay circuit according to an embodiment of the present disclosure;
FIG. 9 is a schematic diagram of a Boost converter according to another embodiment of the present disclosure;
FIG. 10 is a schematic diagram of a Boost converter according to another embodiment of the present disclosure; and
FIG. 11 is a flowchart of a method for controlling a flying capacitor three-level Boost converter according to an embodiment of the present disclosure.

### DETAILED DESCRIPTION

To enable those skilled in the art to better understand technical solutions according to embodiments of the present disclosure, a failure path of a circuit shown in FIG. 1 is first described in detail below.

An application scenario of a flying capacitor three-level Boost converter is not limited in the embodiment of the present disclosure. For example, the flying capacitor three-level Boost converter may be applied to a photovoltaic system, an energy storage system, or other power electronics scenarios.

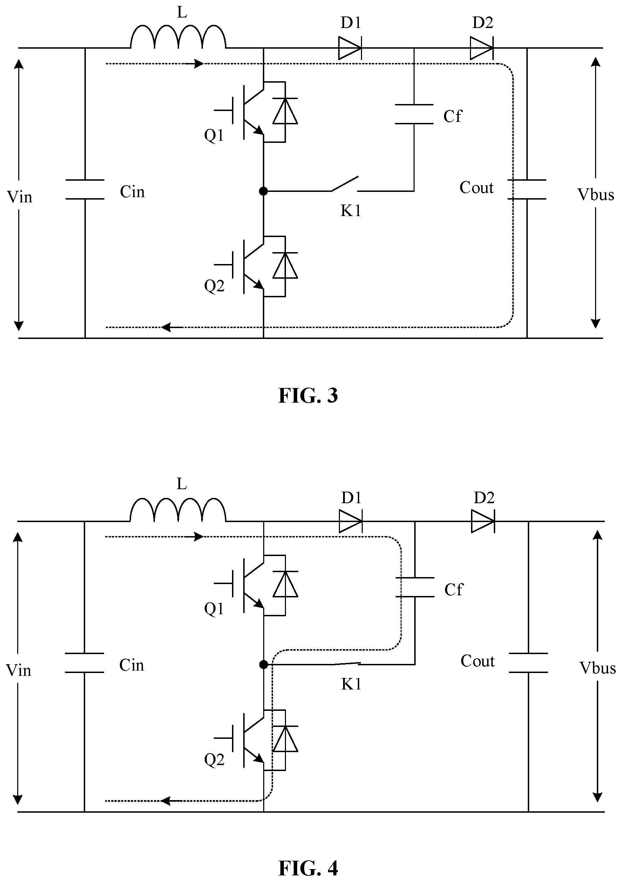

Reference is made to FIG. 1, during a normal operation of the flying capacitor three-level Boost converter, K1 is normally closed while Q1 and Q2 operate alternately. In a case that Q1 is turned on and Q2 is turned off at a previous time instant before shutdown, a controller transmits turn-off signals to both Q1 and K1, and Q1 and K1 fail to be turned off synchronously due to different delays in signal links and differences in turn-off speeds of Q1 and K1. In a case that K1 is turned off first, a current path of an inductor is switched from passing through Q1, K1, and Cf to passing through D1 and D2. After that, a voltage across a branch formed by Q1 connected in series with Q2 is equal to a direct-current bus voltage. However, since Q1 is not turned off yet, Q2 bears the direct-current bus voltage, causing an overvoltage failure of Q2, as shown in FIG. 2 and FIG. 3.

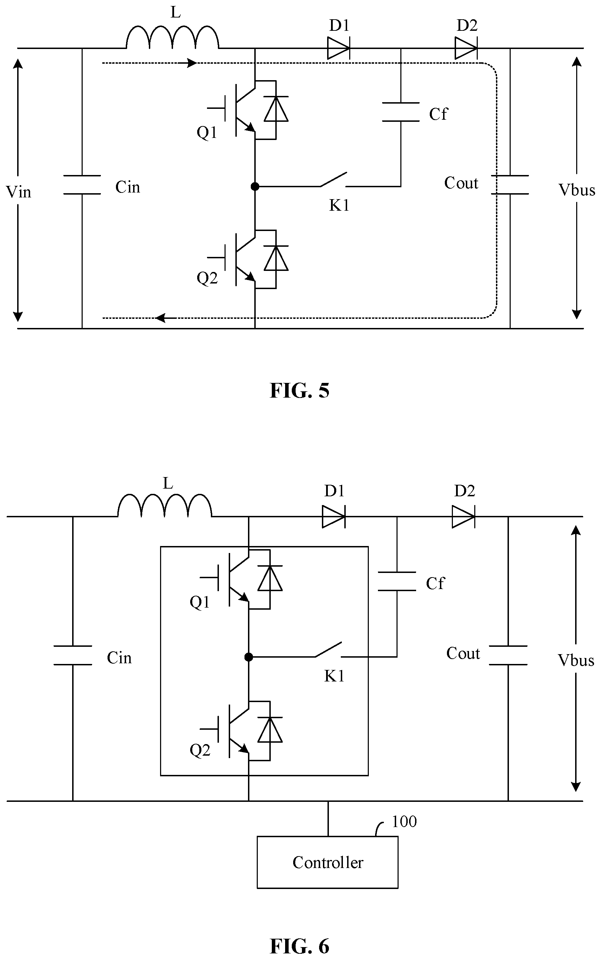

Similarly, in a case that Q1 is turned off and Q2 is turned on at a previous time instant before shutdown, the controller transmits turn-off signals to Q2 and K1. If K1 is turned off first, a current path of the inductor is switched from passing through D1, Cf, K1 and Q2 to passing through D1 and D2. After that, the voltage across the branch formed by Q1 connected in series with Q2 is equal to the direct-current bus voltage. However, since Q2 is not turned off yet, Q1 bears the direct-current bus voltage, causing an overvoltage failure of Q1, as shown in FIG. 4 and FIG. 5.

In summary, during the shutdown of the flying capacitor three-level Boost converter, turning off Q1, Q2, and K1 directly impacts reliability of the topology.

Therefore, in an embodiment of the present disclosure, during the shutdown of the flying capacitor three-level Boost converter, a time instant when K1 is turned off is controlled to be later than a time instant when a power device Q1 is turned off and to be later than a time instant when a power device Q2 is turned off, in order to avoid a failure risk of switching transistors during a shutdown of the flying capacitor three-level Boost converter. Thus, when Q1 and Q2 are turned off during the shutdown, the diodes D1 and D2 are forward biased for freewheeling. A maximum voltage stress on Q1 is clamped at a voltage Vcf (Vbus/2) of the flying capacitor, and a maximum voltage stress on Q2 is clamped at a difference between the bus voltage and the voltage of the flying capacitor, that is, Vbus-Vcf, where typically Vbus-Vcf=Vbus/2, thereby effectively eliminating the risk of overvoltage failure of Q1 and Q2.

In order to make the above objectives, features and advantages of the present disclosure more apparent and easier to be understood, the embodiments of the present disclosure are described in detail below in conjunction with the drawings and the embodiments.

Referring to FIG. 6, FIG. 6 is a schematic diagram of a flying capacitor three-level Boost converter according to an embodiment of the present disclosure.

The flying capacitor three-level Boost converter according to an embodiment of the present disclosure includes a controller 100, an inductor L, a first power device Q1, a second power device Q2, a first diode D1, a second diode D2, a first switch K1, and a flying capacitor Cf.

A first terminal of the inductor L is connected to a positive input terminal of the Boost converter, and a second terminal of the inductor L is connected to an anode of the first diode D1. An anode of the second diode D2 is connected to a cathode of the first diode D1, and a cathode of the second diode D2 is connected to a positive output terminal of the Boost converter.

A first terminal of the first power device Q1 is connected to the second terminal of the inductor L, a second terminal of the first power device Q1 is connected to a first terminal of the second power device Q2, and a second terminal of the second power device Q2 is connected to a negative input terminal of the Boost converter. A first terminal of the first switch K1 is connected to the second terminal of the first power device Q1, a second terminal of the first switch K1 is connected to a first terminal of the flying capacitor Cf, and a second terminal of the flying capacitor Cf is connected to the cathode of the first diode D1.

The controller 100 is configured to control a time instant when the first switch K1 is turned off to be later than a time instant when the first power device Q1 is turned off and to be later than a time instant when the second power device Q2 is turned off.

Since the time instant when K1 is turned off is later than the time instant when Q1 is turned off and later than the time instant when Q2 is turned off, the first diode D1 and the second diode D2 are forward biased for freewheeling when Q1 and Q2 are turned off during the shutdown of the Boost converter. A maximum voltage stress on Q1 is clamped at the voltage Vcf (Vbus/2) of the flying capacitor, and a maximum voltage stress on Q2 is clamped at Vbus-Vcf (Vbus/2), thereby effectively eliminating the risk of overvoltage failure of Q1 and Q2.

Implementations of a delay of turn-off of K1 are not limited in the embodiment of the present disclosure. A turn-off signal may be directly outputted by a controller to control turn-off of K1 to be later than turn-off of the first switching transistor Q1 and to be later than turn-off of the second switching transistor Q2. Alternatively, a delay of the turn-off signal may be implemented via a hardware circuit. Detailed analysis and examples are described below.

First, an implementation in which the controller directly outputs turn-off signals with different timing sequences is described.

The controller is configured to, in response to receiving a Boost converter shutdown instruction or in response to determining to perform a fault shutdown, transmit a turn-off signal to the first power device; transmit a turn-off signal to the second power device; and transmit a turn-off signal to the first switch immediately after a predetermined time interval, that is, the time instant when the first switch is turned off is later than the time instant when the first switching transistor is turned off and later than the time instant when the second switching transistor is turned off.

The predetermined time interval is not limited in the embodiment of the present disclosure, as long as the predetermined time interval may ensure that the time instant when the first switch is turned off later than the time instant when the first power device and the second power device are turned off.

An implementation in which a delay is achieved via a hardware delay circuit is described below in conjunction with the drawings.

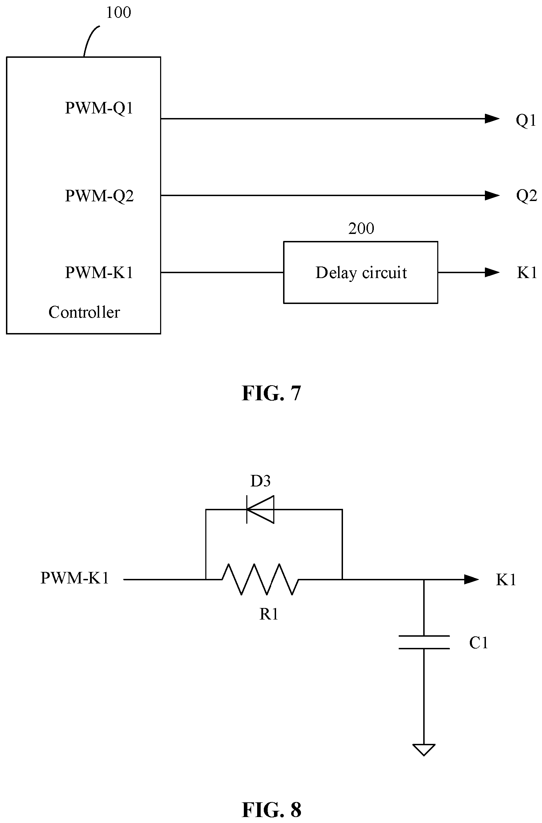

Referring to FIG. 7, FIG. 7 is a schematic diagram of delay control according to an embodiment of the present disclosure.

A Boost converter according to an embodiment of the present disclosure further includes a delay circuit 200.

The controller 100 is further configured to, in response to receiving a Boost converter shutdown instruction or in response to determining to perform a fault shutdown, transmit a turn-off signal PWM-Q1 to the first power device Q1, transmit a turn-off signal PWM-Q2 to the second power device Q2, and transmit a turn-off signal PWM-K1 to the first switch K1.

The turn-off signal transmitted by the controller 100 is outputted to the first switch K1 after being delayed by a predetermined time interval through the delay circuit 200.

The controller 100 includes a first output terminal, a second output terminal, and a third output terminal.

The first output terminal is connected to a control terminal of the first power device Q1, the second output terminal is connected to a control terminal of the second power device Q2, the third output terminal is connected to a first terminal of the delay circuit 200, and a second terminal of the delay circuit 200 is connected to a control terminal of the first switch K1.

The controller 100 transmits the turn-off signal PWM-Q1 via the first output terminal, transmits the turn-off signal PWM-Q2 via the second output terminal, and transmits the turn-off signal PWM-K1 via the third output terminal. Due to the present of the delay circuit 200, the turn-off signal received by K1 lags behind the turn-off signal for Q1 and later than the turn-off signal for Q2. Consequently, Q1 and Q2 are turned off first, and K1 is turned off after Q1 and Q2 are turned off. Q1 and Q2 may be turned off synchronously, or Q1 and Q2 may be turned off asynchronously.

An implementation of a delay circuit is described below through examples.

Referring to FIG. 8, FIG. 8 is a schematic diagram of a delay circuit according to an embodiment of the present disclosure.

The delay circuit in the Boost converter according to an embodiment of the present disclosure includes a first resistor R1 and a first capacitor C1.

The turn-off signal PWM-K1 transmitted by the controller to the first switch K1 is inputted to a first terminal of the first resistor R1. A second terminal of the first resistor R1 is connected to a first terminal of the first capacitor C1. A second terminal of the first capacitor C1 is grounded, and the first terminal of the first capacitor C1 is connected to the control terminal of the first switch K1.

The delay circuit further includes a third diode D3.

A cathode of the third diode D3 is connected to the first terminal of the first resistor R1, and an anode of the third diode D3 is connected to the second terminal of the first resistor R1.

An operation principle of the delay circuit shown in FIG. 8 is as follows. When the turn-off signal PWM-K1 is at a high level, the third diode D3 is reverse biased, and PWM-K1 charges C1 through R1, so that a voltage across C1 rises slowly. K1 is turned off when the voltage reaches a predetermined value after a certain delay. When the turn-off signal PWM-K1 is changed to be at a low level, the third diode D3 is forward biased, and the voltage across C1 is rapidly discharged to zero through the third diode D3.

FIG. 8 only illustrates a delay circuit. In addition, the delay circuit may be implemented by a timer, or implemented by an integrated chip such as CPLD or FPGA. The implementations of the delay circuit are not limited in the present disclosure.

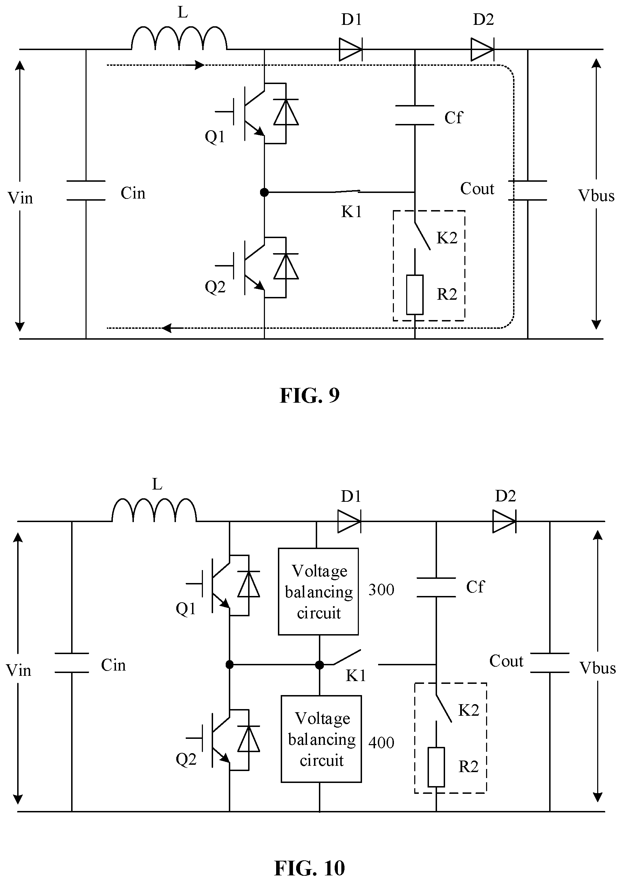

Referring to FIG. 9, FIG. 9 is a schematic diagram of a Boost converter according to another embodiment of the present disclosure.

The Boost converter according to the embodiment of the present disclosure further includes a second switch K2 and a second resistor R2.

A first terminal of the second switch K2 is connected to the second terminal of the first switch K1, and a second terminal of the second switch K2 is connected to the negative input terminal of the Boost converter via the second resistor.

The second switch K2 and the second resistor R2 form a pre-charge circuit for the flying capacitor Cf, for pre-charging a voltage of the flying capacitor Cf to a predetermined value (Vbus/2) before the Boost converter is started.

During a normal operation of the Boost converter, K2 is normally open, K1 is normally closed (K2 is open), and Q1 and Q2 operate at a high frequency.

In a case that the Boost converter is in a state where Q1 is turned on and Q2 is turned off when receiving a shutdown instruction or at a previous time instant before shutdown, the controller first turns off Q1. In this case, the first diode D1 and the second diode D2 are forward biased for freewheeling. Since K1 still remains closed, the voltage across Q1 is clamped at a voltage Vcf (Vbus/2) of the flying capacitor, and the voltage stress on Q2 is clamped at Vbus-Vcf (Vbus/2).

Similarly, in a case that the Boost converter is in a state where Q1 is turned off and Q2 is turned on (or a state where both Q1 and Q2 are turned on) when receiving a shutdown instruction or at a previous time instant before shutdown, the controller first turns off Q2 (or turns off both Q1 and Q2). In this case, the diodes D1 and D2 are forward biased for freewheeling. Since K1 still remains closed, the voltage across Q1 is clamped at the voltage Vcf (Vbus/2) of the flying capacitor, and the voltage across Q2 is clamped at Vbus-Vcf (Vbus/2). Therefore, the risk of overvoltage failure of Q1 and Q2 may be effectively eliminated with the technical solution according to an embodiment of the present disclosure.

In addition, after K1 is turned off, a voltage balancing circuit may be connected in parallel with one of Q1 and Q2, in order to ensure static voltage balancing between Q1 and Q2. It should be understood that since Q1 is connected in series with Q2, when a voltage across one of the power devices Q1 and Q2 is clamped, a voltage across the other power device is also clamped.

Referring to FIG. 10, FIG. 10 is a schematic diagram of a Boost converter according to another embodiment of the present disclosure.

The Boost converter according to the embodiment of the present disclosure further includes at least one of a first voltage balancing circuit and a second voltage balancing circuit. In FIG. 10, descriptions are provided by taking a Boost converter including two voltage balancing circuits as an example.

The first voltage balancing circuit 300 includes a resistor or a voltage regulator, and the second voltage balancing circuit 400 includes a resistor or a voltage regulator.

The first voltage balancing circuit 300 is connected in parallel between a first terminal and a second terminal of the first power device Q1.

The second voltage balancing circuit 400 is connected in parallel between a first terminal and a second terminal of the second power device Q2.

The types of K1 and K2 are not limited in the embodiment of the present disclosure. For example, K1 and K2 may be a relay or a power semiconductor switching device. The power semiconductor power device may be IGBT, MOS or the like.

Based on the flying capacitor three-level Boost converter according to the above embodiments, a method for controlling a flying capacitor three-level Boost converter is further provided according to an embodiment of the present disclosure. The method is described in detail below in conjunction with the drawings.

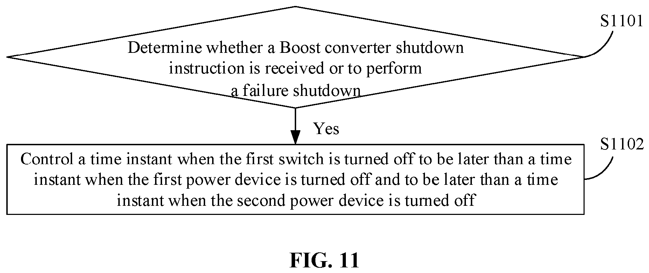

Referring to FIG. 11, FIG. 11 is a flowchart of a method for controlling a flying capacitor three-level Boost converter according to an embodiment of the present disclosure.

In the method for controlling the flying capacitor three-level Boost converter according to the embodiment of the present disclosure, the Boost converter includes a controller, an inductor, a first power device, a second power device, a first diode, a second diode, a first switch, and a flying capacitor.

The method includes S1101 and S1102.

In S1101, it is determined whether a Boost converter shutdown instruction is received or whether to perform a fault shutdown. The process proceeds to S1102 in response to receiving the Boost converter shutdown instruction or in response to determining to perform the fault shutdown.

In S1102, a time instant when the first switch is turned off is controlled to be later than a time instant when the first power device is turned off and to be later than a time instant when the second power device is turned off.

In the method for controlling the flying capacitor three-level Boost converter according to the embodiment of the present disclosure, since the time instant when the first switch is turned off is later than the time instant when the first power device is turned off and later than the time instant when the second power device is turned off, the first diode and the second diode are forward biased for freewheeling when the first power device and the second power device are turned off during the shutdown of the Boost converter. A maximum voltage stress on the first power device is clamped at a voltage Vcf (that is, a half of the bus voltage) of the flying capacitor, and a maximum voltage stress on the second power device is clamped at Vbus-Vcf (that is, a half of the bus voltage), thereby effectively eliminating the risk of overvoltage failure of the first power device and the second power device.

Implementations of a delay of turn-off of the first switch are not limited in the embodiment of the present disclosure. A turn-off signal may be directly outputted under control of software to control turn-off of the first switch to be later than turn-off of the first switching transistor. Alternatively, a delay of the turn-off signal may be implemented via a hardware circuit. Detailed analysis and examples are described below.

In an implementation of the software, the controlling the time instant when the first switch is turned off to be later than the time instant when the first power device is turned off and later than the second power device is turned off includes: transmitting a turn-off signal to the first power device and the second power device, and transmitting a turn-off signal to the first switch immediately after a predetermined time interval.

In an implementation of hardware, the Boost converter further includes a delay circuit. The controlling the time instant when the first switch is turned off to be later than the time instant when the first power device and the second power device are turned off further includes: transmitting a turn-off signal to the first power device, transmitting a turn-off signal to the second power device, and transmitting a turn-off signal to the first switch, where the turn-off signal is outputted to the first switch after being delayed by a predetermined time interval through the delay circuit.

It should be noted that the embodiments in this specification are described in a progressive manner. Each of the embodiments focuses on differences from other embodiments, and the same or similar parts of the embodiments may be referenced to each other. The system or apparatus disclosed in the embodiments correspond to the method disclosed in the embodiments, and therefore are described in a relatively simple way. Reference may be made to the description of the method for relevant details.

The disclosed embodiments are described above so that those skilled in the art can implement or use the present disclosure. Various modifications to these embodiments will be apparent to those skilled in the art. The general principles defined herein may be implemented in other embodiments without departing from the spirit or scope of the present disclosure. Therefore, the present disclosure shall not be limited to the embodiments described herein, but have the widest scope that complies with the principle and novelty disclosed in this specification.

## Claims

1. A flying capacitor three-level Boost converter, **characterized in** comprising a controller, an inductor, a first power device, a second power device, a first diode, a second diode, a first switch, and a flying capacitor, wherein
a first terminal of the inductor is connected to a positive input terminal of the Boost converter, a second terminal of the inductor is connected to an anode of the first diode, an anode of the second diode is connected to a cathode of the first diode, and a cathode of the second diode is connected to a positive output terminal of the Boost converter;
a first terminal of the first power device is connected to the second terminal of the inductor, a second terminal of the first power device is connected to a first terminal of the second power device, a second terminal of the second power device is connected to a negative input terminal of the Boost converter; a first terminal of the first switch is connected to the second terminal of the first power device, a second terminal of the first switch is connected to a first terminal of the flying capacitor, and a second terminal of the flying capacitor is connected to the cathode of the first diode; and
the controller is configured to control a time instant when the first switch is turned off to be later than a time instant when the first power device is turned off and to be later than a time instant when the second power device is turned off.

2. The converter according to claim 1, wherein the controller is further configured to, in response to receiving a Boost converter shutdown instruction or in response to determining to perform a fault shutdown:
transmit a turn-off signal to the first power device;
transmit a turn-off signal to the second power device; and
transmit a turn-off signal to the first switch immediately after a predetermined time interval.

3. The converter according to claim 1, further comprising a delay circuit, wherein
the controller is further configured to, in response to receiving a Boost converter shutdown instruction or in response to determining to perform a fault shutdown:
transmit a turn-off signal to the first power device;
transmit a turn-off signal to the second power device; and
transmit a turn-off signal to the first switch, wherein
the turn-off signal transmitted by the controller is outputted to the first switch after being delayed by a predetermined time interval through the delay circuit.

4. The converter according to claim 3, wherein the delay circuit comprises a first resistor and a first capacitor, wherein
the turn-off signal transmitted by the controller to the first switch is inputted to a first terminal of the first resistor, a second terminal of the first resistor is connected to a first terminal of the first capacitor, a second terminal of the first capacitor is grounded, and the first terminal of the first capacitor is connected to a control terminal of the first switch.

5. The converter according to claim 4, wherein the delay circuit further comprises a third diode, wherein
a cathode of the third diode is connected to the first terminal of the first resistor, and an anode of the third diode is connected to the second terminal of the first resistor.

6. The converter according to any one of claims 3 to 4, wherein the controller comprises a first output terminal, a second output terminal, and a third output terminal;
the first output terminal is connected to a control terminal of the first power device, the second output terminal is connected to a control terminal of the second power device, the third output terminal is connected to a first terminal of the delay circuit, and a second terminal of the delay circuit is connected to a control terminal of the first switch; and
the turn-off signals are transmitted via the first output terminal, the second output terminal, and the third output terminal of the controller, respectively.

7. The converter according to any one of claims 1 to 5, further comprising a second switch and a second resistor,
wherein a first terminal of the second switch is connected to the second terminal of the first switch, and a second terminal of the second switch is connected to the negative input terminal of the Boost converter via the second resistor.

8. The converter according to any one of claims 3 to 4, further comprising at least one of a first voltage balancing circuit and a second voltage balancing circuit, wherein the first voltage balancing circuit comprises at least one of a resistor and a voltage regulator, and the second voltage balancing circuit comprises at least one of a resistor and a voltage regulator, wherein
the first voltage balancing circuit is connected in parallel between a first terminal and a second terminal of the first power device; and
the second voltage balancing circuit is connected in parallel between a first terminal and a second terminal of the second power device.

9. A method for controlling a flying capacitor three-level Boost converter, **characterized in that** the Boost converter comprises a controller, an inductor, a first power device, a second power device, a first diode, a second diode, a first switch and a flying capacitor; and
the method comprises:
controlling, in response to receiving a Boost converter shutdown instruction or in response to determining to perform a fault shutdown, a time instant when the first switch is turned off to be later than a time instant when the first power device is turned off and to be later than a time instant when the second power device is turned off.

10. The method according to claim 9, wherein the controlling the time instant when the first switch is turned off to be later than the time instant when the first power device is turned off and to be later than the time instant when the second power device is turned off comprises:
transmitting a turn-off signal to the first power device;
transmitting a turn-off signal to the second power device; and
transmitting a turn-off signal to the first switch immediately after a predetermined time interval.

11. The method according to claim 9, wherein the Boost converter further comprises a delay circuit,
wherein the controlling the time instant when the first switch is turned off to be later than the time instant when the first power device is turned off and to be later than the time instant when the second power device is turned off comprises:
transmitting a turn-off signal to the first power device;
transmitting a turn-off signal to the second power device; and
transmitting a turn-off signal to the first switch, wherein
the turn-off signal is outputted to the first switch after being delayed by a predetermined time interval through the delay circuit.
